# EUROPEAN PATENT APPLICATION

(11) **EP 4 556 175 A1**
(43) Date of publication of application: **21.05.2025**
(21) Application number: 24193774.7
(22) Date of filing: 09.08.2024
(51) Int. Cl.: B25J 15/00

(54) **ELECTRORHEOLOGICAL SHAPE RETAINING MEMBRANE**

(30) Priority: 17.11.2023 US 202318513109
(71) Applicant: The Boeing Company, Arlington, VA 22202 (US)
(72) Inventor: Ko, William, Arlington, 22202 (US); Chowdhury, Nayeem Tawqir, Arlington, 22202 (US)
(74) Representative: Witte, Weller & Partner Patentanwälte mbB

(57) **Abstract**

Shape retaining membranes, methods of use, and end effectors using a shape retaining membrane are presented. A shape retaining membrane (202, 300, 400, 500, 600) comprises a porous substrate (204, 302, 404, 504) impregnated with an electrorheological fluid (202, 303); a pair of high voltage electrodes (208, 304, 414, 41, 514, 516) positioned on either side of the porous substrate (204, 302, 404, 504); and a skin (210, 310, 424, 524) wrapped around the porous substrate (204, 302, 404, 504) and the high voltage electrodes (208, 304, 414, 416, 514, 516).

## Description

### BACKGROUND INFORMATION

### 1. Field:

The present disclosure relates generally to a shape retaining membrane and methods of use.

### 2. Background:

Some manufacturing processes, such as composite manufacturing, include shaping processes. Some manufacturing processes include the use of shape-conforming tools that can change rigidity on demand.

Current shape changing tools include tools having a mechanical locking mechanism. Mechanical locking mechanisms are undesirably heavy and prone to mechanical wear and breakdown. Other shape changing tools include using a vacuum bag. Vacuum bag shape conforming systems are slow to change rigidity and are vulnerable to leaks, which can reduce or stop the vacuum bag from retaining the desired shape.

Therefore, it would be desirable to have a method and apparatus that takes into account at least some of the issues discussed above, as well as other possible issues. For example, it would be desirable to provide shape-conforming tools that are at least one of faster, lighter, or less prone to wear.

### SUMMARY

An embodiment of the present disclosure provides a shape retaining membrane. The shape retaining membrane comprises a porous substrate impregnated with an electrorheological fluid, a pair of high voltage electrodes positioned on either side of the porous substrate, and a skin wrapped around the porous substrate and the high voltage electrodes.

Another embodiment of the present disclosure provides a method of moving and forming a composite laminate. A composite laminate is held against a lift surface of a pick and place end effector while a shape retaining membrane of the pick and place end effector is in a first shape and while an electrical field is applied to the shape retaining membrane supporting the lift surface. The electrical field is removed from the shape retaining membrane while the shape retaining membrane is in the first shape and while the composite laminate is held against the lift surface. The shape of the shape retaining membrane is changed to a second shape to form the composite laminate. The electrical field is applied to the electrorheological fluid to maintain the shape retaining membrane in the second shape.

Yet another embodiment of the present disclosure provides a pick and place end effector. The pick and place end effector comprises a shape retaining membrane comprising a porous substrate impregnated with an electrorheological fluid, a pair of high voltage electrodes on either side of the porous substrate, and a skin wrapped around the porous substrate and the high voltage electrodes; a lift surface configured to contact a composite laminate, the lift surface connected to the shape retaining membrane; and a connector configured to connect the pick and place end effector to robot or gantry, the connector attached to the shape retaining membrane.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a cross-sectional view of a shape retaining membrane in accordance with an illustrative embodiment;
**Figure 4** is an illustration of a cross-sectional view of a shape retaining membrane in accordance with an illustrative embodiment;
**Figure 5** is an illustration of a cross-sectional view of a shape retaining membrane in accordance with an illustrative embodiment;
**Figure 6** is an illustration of a cross-sectional view of a shape retaining membrane in accordance with an illustrative embodiment;
**Figure 7** is an illustration of a cross-sectional view of an end effector with a shape retaining membrane in accordance with an illustrative embodiment;
**Figure 8** is an illustration of a cross-sectional view of an end effector with a shape retaining membrane holding a composite laminate in accordance with an illustrative embodiment;
**Figure 9** is an illustration of a cross-sectional view of an end effector with a shape retaining membrane shaping a composite laminate in accordance with an illustrative embodiment;
**Figure 10** is a flowchart of a method of moving and forming a composite laminate in accordance with an illustrative embodiment;
**Figure 11** is an illustration of an aircraft manufacturing and service method in a form of a block diagram in accordance with an illustrative embodiment; and
**Figure 12** is an illustration of an aircraft in a form of a block diagram in which an illustrative embodiment may be implemented.

### DETAILED DESCRIPTION

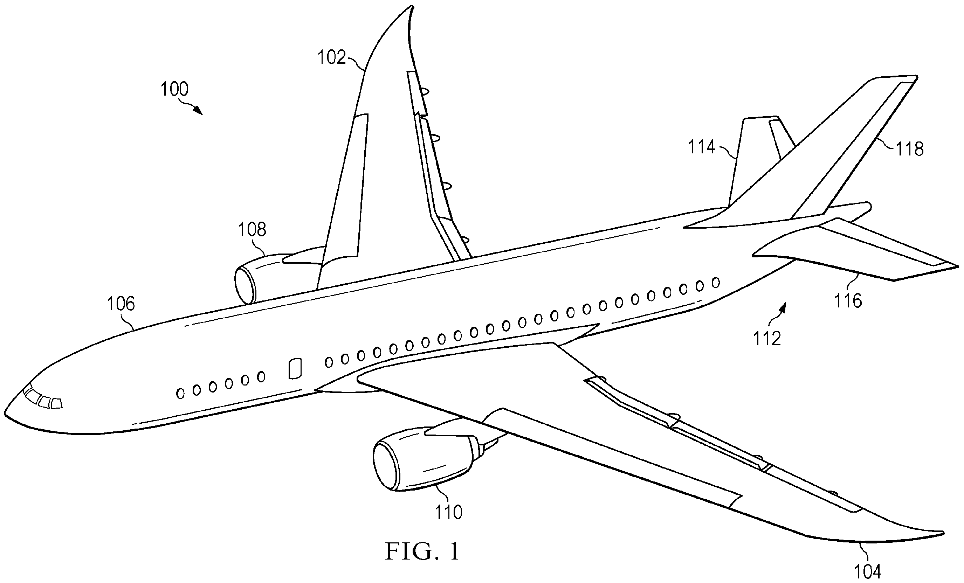

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can be manufactured using the shape retaining membrane as disclosed. In some illustrative examples, a composite part of aircraft **100** can be shaped using an end effector having a shape retaining membrane of the illustrative examples. In some illustrative examples, a portion of at least one of wing **102,** wing **104,** or body **106** can be shaped using a shape retaining membrane of the illustrative examples.

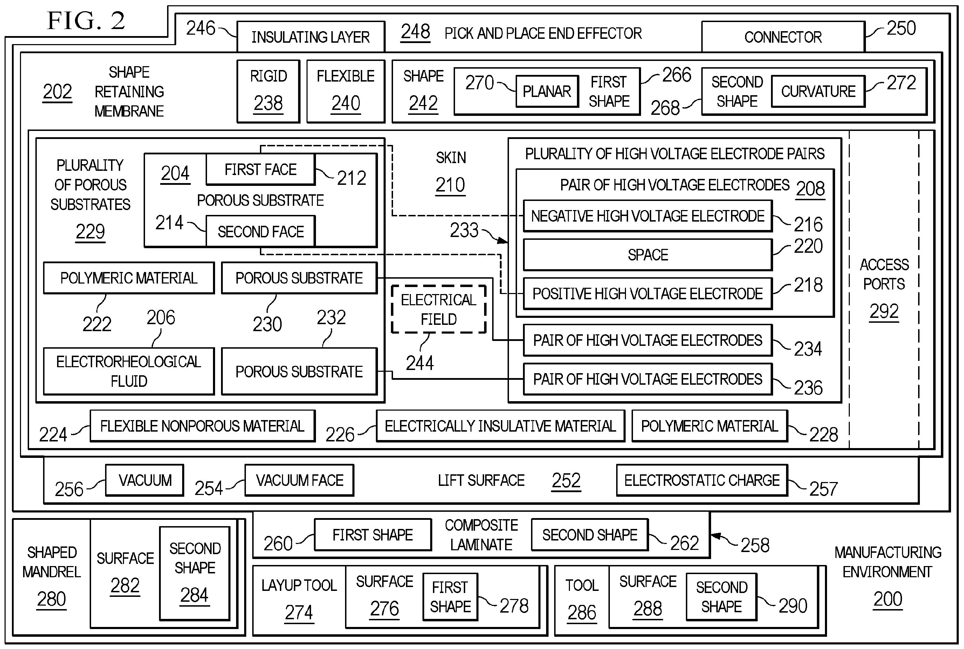

Turning now to **Figure 2****,** an illustration of a block diagram of a manufacturing environment is depicted in accordance with an illustrative embodiment. Manufacturing environment **200** has shape retaining membrane **202.** Shape retaining membrane **202** can be used to shape composite laminate **258.**

Shape retaining membrane **202** comprises porous substrate **204** impregnated with electrorheological fluid **206,** pair of high voltage electrodes **208** positioned on either side of porous substrate **204,** and skin **210** wrapped around porous substrate **204** and pair of high voltage electrodes **208.** In some illustrative examples, shape retaining membrane **202** can be referred to as an electrorheological shape retaining membrane due to the presence of electrorheological fluid **206.**

As depicted, pair of high voltage electrodes **208** comprises negative high voltage electrode **216** on first face **212** of porous substrate **204,** and positive high voltage electrode **218** on second face **214** of porous substrate **204.** Space **220** is between positive high voltage electrode **218** and negative high voltage electrode **216.** In some illustrative examples, space **220** between pair of high voltage electrodes **208** is configured to reduce arcing.

Pair of high voltage electrodes **208** can utilize any desirable voltage that modifies the viscosity of electrorheological fluid **206.** Pair of high voltage electrodes **208** can utilize any desirable voltage that transitions electrorheological fluid **206** between being rigid **238** and flexible **240.** In some illustrative examples, the high voltage can be in the range of 1-50kV.

A thickness of porous substrate **204** is selected based on a desired flexibility of shape retaining membrane, a desired voltage to be applied by pair of high voltage electrodes **208,** and reduction or prevention of arcing between pair of high voltage electrodes **208.** The thinner the layer of porous substrate **204** with electrorheological fluid **206,** the higher the chance of arcing for a given voltage. The thinner the layer of porous substrate **204** with electrorheological fluid **206,** the higher electric field strength for a given voltage. Increasing a thickness of porous substrate **204** acts to prevent or reduce arcing between pair of high voltage electrodes **208.**

Pair of high voltage electrodes **208** can apply electrical field **244** to electrorheological fluid **206** in porous substrate **204.** Electrical field **244** applied to electrorheological fluid **206** causes shape retaining membrane **202** to become rigid **238.** Removing electrical field **244** from electrorheological fluid **206** causes shape retaining membrane **202** to become flexible **240.** When shape retaining membrane **202** is flexible **240,** shape **242** of shape retaining membrane **202** can be changed. When shape retaining membrane **202** is rigid **238,** shape **242** of shape retaining membrane **202** is maintained. By selectively applying and removing electrical field **244,** shape **242** of shape retaining membrane **202** can be selectively changed and maintained.

Generating electrical field **244** can use lower power than generating a vacuum for conventional vacuum shape changing. Application of electrical field **244** to electrorheological fluid **206** changes the viscosity of electrorheological fluid **206.** Application of electrical field **244** causes shape retaining membrane **202** to become rigid **238** faster than a vacuum based conventional shape changing layer can become rigid.

Porous substrate **204** is formed of a material configured to be flexible enough to allow for changing shape **242.** Porous substrate **204** is formed of a material configured to not chemically react to electrorheological fluid **206.** In some illustrative examples, porous substrate **204** comprises polymeric material **222.** In some illustrative examples, porous substrate **204** is a consumable. In some other illustrative examples, porous substrate **204** is reusable and replaceable. In some illustrative examples, porous substrate **204** is durable and used for the life of shape retaining membrane **202.**

Skin **210** is configured to maintain electrorheological fluid **206** in shape retaining membrane **202.** Electrorheological fluid **206** is present in porous substrate **204** such that porous substrate **204** is saturated but excess electrorheological fluid **206** is not dripping from porous substrate **204.** Skin **210** is not fully sealed. Skin **210** is present to reduce contamination to composite laminate **258.** Skin **210** is configured to be flexible enough to allow for changing shape **242** of shape retaining membrane **202.** In some illustrative examples, skin **210** comprises flexible nonporous material **224.** In some illustrative examples, skin **210** comprises silicone. In some illustrative examples, skin **210** comprises nitrile rubber or thermoplastic polyurethane (TPU). In some illustrative examples, skin **210** comprises polymeric material **228.**

In some illustrative examples, skin **210** comprises electrically insulative material **226.** In some illustrative examples, when skin **210** comprises electrically insulative material **226,** skin **210** can prevent or reduce arcing outside of shape retaining membrane **202.** In some illustrative examples, when skin **210** comprises electrically insulative material **226,** skin **210** can protect surrounding structures from electrical field **244.** In some illustrative examples, when skin **210** comprises electrically insulative material **226,** skin **210** can protect surrounding structures from arcing.

In some illustrative examples, shape retaining membrane **202** further comprises insulating layer **246** on an outside of skin **210.** In some illustrative examples, shape retaining membrane **202** comprises insulating layer **246** to reduce electrical field **244** exiting shape retaining membrane **202.** In some illustrative examples, shape retaining membrane **202** comprises insulating layer **246** to protect surrounding structures from arcing.

In some illustrative examples, porous substrate **204** is one of plurality of porous substrates **229.** In some illustrative examples, shape retaining membrane **202** further comprises plurality of high voltage electrode pairs **233** interspaced with plurality of porous substrates **229,** plurality of high voltage electrode pairs **233** comprising pair of high voltage electrodes **208** on either side of porous substrate **204.** Plurality of porous substrates **229** comprises any desirable quantity of porous substrates. In this illustrative example, plurality of porous substrates **229** comprises porous substrate **204,** porous substrate **230,** and porous substrate **232.** Each of plurality of porous substrates **229** is impregnated with electrorheological fluid **206.**

Plurality of high voltage electrode pairs **233** comprises any desirable quantity of high voltage electrodes. As depicted, plurality of high voltage electrode pairs **233** comprises pair of high voltage electrodes **208** on either side of porous substrate **204,** pair of high voltage electrodes **234** one either side of porous substrate **230,** and pair of high voltage electrodes **236** on either side of porous substrate **232.**

In some illustrative examples, some pairs of plurality of high voltage electrode pairs **233** share an electrode with at least one other pair of plurality of high voltage electrode pairs **233.** In some illustrative examples, pair of high voltage electrodes **234** shares positive high voltage electrode **218** of pair of high voltage electrodes **208.** In some illustrative examples, pair of high voltage electrodes **234** shares a negative high voltage electrode with pair of high voltage electrodes **236.**

In some illustrative examples, having plurality of porous substrates **229** and plurality of high voltage electrode pairs **233** creates a layered configuration in shape retaining membrane **202.** A layered configuration in shape retaining membrane **202** can be used to avoid or reduce shearing between shape retaining membrane **202** and the composite laminate **258.** A multi-layer approach of shape retaining membrane **202** can allow movement with shape retaining membrane **202.** Alternating layers of high voltage electrodes and thinner layers of porous material in shape retaining membrane **202** allows each layer to slide/shear during movement of shape retaining membrane **202** as opposed to trying to bend one thick block of porous material.

In some illustrative examples, access ports **292** extend through skin **210** of shape retaining membrane **202.** Access ports **292** can provide electricity to plurality of high voltage electrode pairs **233.** In some illustrative examples, access ports **292** can extend through shape retaining membrane **202** to provide access to utilities to other systems. In some illustrative examples, access ports **292** can extend through shape retaining membrane **202** to provide access to utilities to aspects of pick and place end effector **248,** such as lift surface **252.**

In some illustrative examples, shape retaining membrane **202** is part of pick and place end effector **248.** In some illustrative examples, pick and place end effector **248** comprises shape retaining membrane **202,** lift surface **252** configured to contact composite laminate **258,** and connector **250** configured to connect pick and place end effector **248** to a robot or a gantry. Lift surface **252** is connected to shape retaining membrane **202.** Connector **250** is attached to shape retaining membrane **202.** Connector **250** can take any desirable form. In some illustrative examples, connector **250** can take the form of spring loaded connectors such as "Pogos." Shape retaining membrane **202** comprises porous substrate **204** impregnated with electrorheological fluid **206,** pair of high voltage electrodes **208** on either side of porous substrate **204,** and skin **210** wrapped around porous substrate **204** and pair of high voltage electrodes **208.**

Lift surface **252** can utilize electrostatic charge **257,** vacuum **256,** or any other desirable method to hold composite laminate **258** to lift surface **252.** Lift surface **252** is flexible to allow for changing shape to form composite laminate **258.** In some illustrative examples, lift surface **252** is a flexible vacuum face **254** to move between multiple shapes.

Pick and place end effector **248** can be used to lift, form, and place composite laminate **258.** In some illustrative examples, pick and place end effector **248** lifts composite laminate **258** from layup tool **274.** Layup tool **274** has surface **276** with first shape **278.** When pick and place end effector **248** lifts composite laminate **258** from surface **276** of layup tool **274,** composite laminate **258** has first shape **260.** When pick and place end effector **248** lifts composite laminate **258** from surface **276** of layup tool **274,** shape retaining membrane **202** has first shape **266.** In some illustrative examples, first shape **266** is planar **270.** Shape retaining membrane **202** is held in first shape **266** by electrical field **244.** Shape retaining membrane **202** is made rigid by the application of electrical field **244** to electrorheological fluid **206** to increase viscosity of electrorheological fluid **206** to maintain first shape **266.**

Pick and place end effector **248** is used to change composite laminate **258** to second shape **262.** Pick and place end effector **248** is changed to second shape **268** to change composite laminate **258** to second shape **262.** In some illustrative examples, second shape **268** has curvature **272.** To change shape **242** of shape retaining membrane **202,** electrical field **244** is removed. By removing electrical field **244,** electrorheological fluid **206** has a lower viscosity and shape retaining membrane **202** goes from being rigid **238** to being flexible **240.**

In some illustrative examples, to form composite laminate **258** to have second shape **262,** pick and place end effector **248** applies composite laminate **258** to surface **282** of shaped mandrel **280** having second shape **284.** In some illustrative examples, shaped mandrel **280** is used only to shape composite laminate **258.** In some illustrative examples, after forming second shape **262** in composite laminate **258,** pick and place end effector **248** removes composite laminate **258** from shaped mandrel **280.**

In some illustrative examples, composite laminate **258** is deposited on surface **282** after forming second shape **262** into composite laminate **258.** In these illustrative examples, composite laminate **258** is shaped against the same tool that it is deposited onto.

In other illustrative examples, second shape **262** is formed into composite laminate **258** using a different tool than a tool composite laminate **258** is deposited upon. In some illustrative examples, after forming second shape **262** into composite laminate **258,** composite laminate **258** is deposited onto surface **288** of tool **286** with second shape **290.**

Shape retaining membrane **202** comprises pair of high voltage electrodes **208** positioned on either side of porous substrate **204;** electrorheological fluid **206** located between pair of high voltage electrodes **208;** and skin **210** wrapped around porous substrate **204** and pair of high voltage electrodes **208.** In shape retaining membrane **202,** an inverse relationship between electrode voltage and separation distance exists such that as space **220** between pair of high voltage electrodes **208** increases the voltage needed to lower viscosity in electrorheological fluid **206** decreases.

In some illustrative examples, shape retaining membrane **202** further comprises porous substrate **204** impregnated with electrorheological fluid **206** located between pair of high voltage electrodes **208.** In some illustrative examples, space **220** between pair of high voltage electrodes **208** is configured to reduce arcing.

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, shape retaining membrane **202** can comprise any desirable quantity of porous substrates. In some illustrative examples, shape retaining membrane **202** has only one porous substrate, porous substrate **204.** In other illustrative examples, plurality of porous substrates **229** comprises only two porous substrates. In some illustrative examples, plurality of porous substrates **229** comprises more than three porous substrates. Likewise, in some illustrative examples, only pair of high voltage electrodes **208** is present in shape retaining membrane **202.** In some illustrative examples, plurality of high voltage electrode pairs **233** has two pairs of high voltage electrodes. In some illustrative examples, plurality of high voltage electrode pairs **233** has more than three pairs of high voltage electrodes. Further, insulating layer **246** can be optional.

In some illustrative examples, second shape **284** and second shape **290** are the same. In other illustrative examples, second shape **284** is approximately the same as second shape **290** but with variations within **10%** of second shape **290.** In some illustrative examples, second shape **284** is an iterative step in achieving second shape **290.** In these illustrative examples, composite laminate **258** can be changed from first shape **260** to an intermediate shape on shaped mandrel **280** prior to forming composite laminate **258** into second shape **262** against tool **286.**

Although not depicted in **Figure 2****,** discontinuous regions of opposing electrode polarities can be present in the same layer. In these illustrative examples, more than one pair of high voltage electrodes can be associated with a porous substrate. For example, a positive high voltage electrode can be associated with a portion of first face **212** while negative high voltage electrode **216** is associated with a different portion of first face **212.** In this example, a negative high voltage electrode is associated with a portion of second face **214** while positive high voltage electrode **218** is associated with a different portion of second face **214.**

In some illustrative examples, discontinuous regions of the same electrode polarities can be present in the same layer. For example, multiple positive high voltage electrodes can be on second face **214** of porous substrate **204** and multiple negative high voltage electrodes can be on first face **212** of porous substrate **204.** By selectively activating the multiple positive high voltage electrodes and multiple negative high voltage electrodes, a portion of porous substrate **204** can be rigid **238** while a different portion of porous substrate **204** is flexible **240.** In some illustrative examples, porous substrate **204** can be cut, discontinuous, or scored to allow for greater flexibility between the different portions of porous substrate **204.**

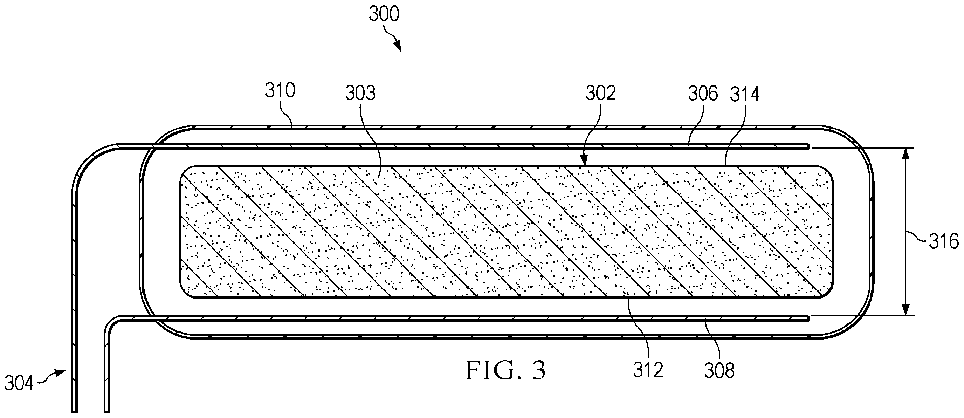

Turning now to **Figure 3****,** an illustration of a cross-sectional view of a shape retaining membrane is depicted in accordance with an illustrative embodiment. Shape retaining membrane **300** is a physical implementation of shape retaining membrane **202** of **Figure 2****.**

Shape retaining membrane **300** comprises porous substrate **302** impregnated with electrorheological fluid **303.** Pair of high voltage electrodes **304** is positioned on either side of porous substrate **302.** Skin **310** is wrapped around porous substrate **302** and pair of high voltage electrodes **304.**

As depicted, pair of high voltage electrodes **304** comprises negative high voltage electrode **308** on first face **312** of porous substrate **302** and positive high voltage electrode **306** on second face **314** of porous substrate **302.** In some illustrative examples, porous substrate **302** comprises a polymeric material.

In some illustrative examples, skin **310** comprises a flexible nonporous material. In some illustrative examples, skin **310** comprises a polymeric material. In some illustrative examples, skin **310** comprises an electrically insulative material. When skin **310** comprises an electrically insulative material, skin **310** can reduce or prevent arcing to outside structures.

In some illustrative examples, space **316** between the pair of high voltage electrodes is configured to reduce arcing. Although not depicted in **Figure 3****,** other layers can be attached to skin **310.** In some illustrative examples, an electrically insulative layer can be placed on an outside of skin **310** to protect any adjacent structures such as a tool, a robot, or any other surrounding structures from the electric field or arcing.

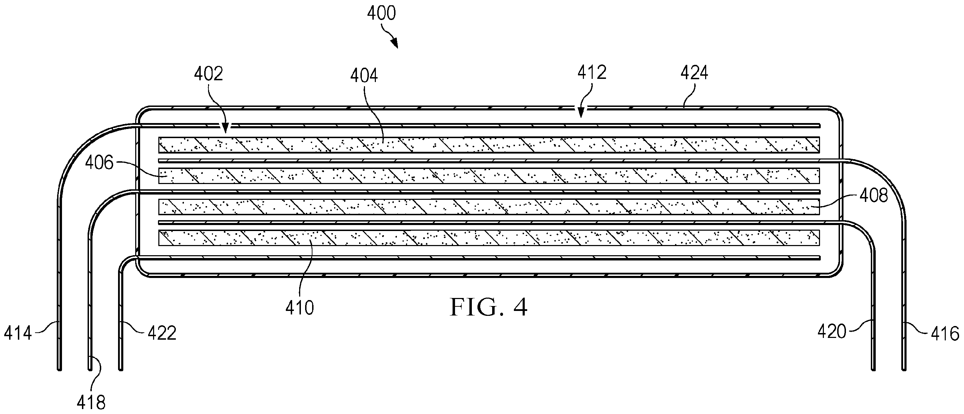

Turning now to **Figure 4****,** an illustration of a cross-sectional view of a shape retaining membrane is depicted in accordance with an illustrative embodiment. Shape retaining membrane **400** is a physical implementation of shape retaining membrane **202** of **Figure 2****.**

Shape retaining membrane **400** comprises plurality of porous substrates **402.** Plurality of porous substrates **402** comprises porous substrate **404,** porous substrate **406** porous substrate **408,** and porous substrate **410.** Each of plurality of porous substrates **402** is impregnated with an electrorheological fluid.

Shape retaining membrane **400** further comprises plurality of high voltage electrode pairs **412** interspaced with plurality of porous substrates **402.** Plurality of high voltage electrode pairs **412** comprises pairs of high voltage electrodes on either side of each respective porous substrate. As depicted, each pair of high voltage electrode pairs has at least one voltage electrode in common with another pair of high voltage electrode pairs.

Plurality of high voltage electrode pairs **412** comprise positive high voltage electrode **414,** negative high voltage electrode **416,** positive high voltage electrode **418,** negative high voltage electrode **420,** and positive high voltage electrode **422.** Positive high voltage electrode **414** and negative high voltage electrode **416** act as a pair of high voltage electrodes to generate an electric field in the electrorheological fluid in porous substrate **404.** Negative high voltage electrode **416** and positive high voltage electrode **418** act as a pair of high voltage electrodes to generate an electric field in the electrorheological fluid in porous substrate **406.** As depicted, the pairs of high voltage electrodes used to generate electric fields for porous substrate **404** and porous substrate **406** share a high voltage electrode, negative high voltage electrode **416.**

Skin **424** is wrapped around plurality of porous substrates **402** and plurality of high voltage electrode pairs **412.** Skin **424** is configured to maintain plurality of porous substrates **402** and plurality of high voltage electrode pairs **412** in one package. Skin **424** is configured to maintain the electrorheological fluid in shape retaining membrane **400.**

Skin **424** is configured to be flexible enough to allow for changing the shape of shape retaining membrane **400.** In some illustrative examples, skin **424** comprises a flexible nonporous material. In some illustrative examples, skin **424** comprises a polymeric material. In some illustrative examples, skin **424** comprises an electrically insulative material.

In some illustrative examples, when skin **424** comprises an electrically insulative material, skin **424** can prevent or reduce arcing outside of shape retaining membrane **400.** In some illustrative examples, when skin **424** comprises an electrically insulative material, skin **424** can protect surrounding structures from electrical fields.

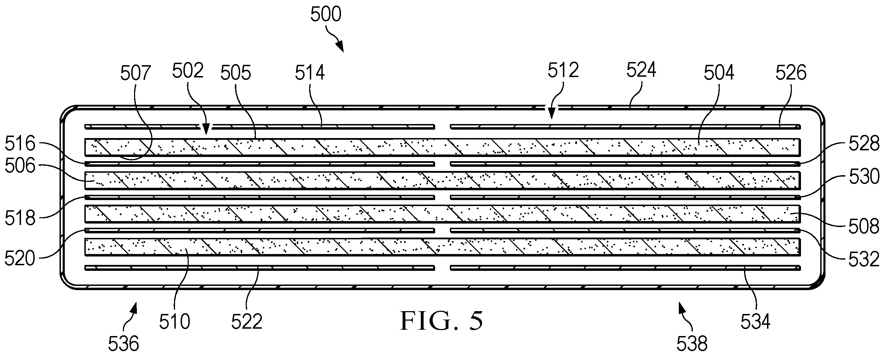

Turning now to **Figure 5****,** an illustration of a cross-sectional view of a shape retaining membrane is depicted in accordance with an illustrative embodiment. Shape retaining membrane **500** is a physical implementation of shape retaining membrane **202** of **Figure 2****.**

Shape retaining membrane **500** comprises discontinuous regions of opposing electrode polarities in the same layer and may be worth capturing to broaden the scope of configurations for this shape retaining membrane. Shape retaining membrane comprises plurality of porous substrates **502.** Plurality of porous substrates **502** comprises porous substrate **504,** porous substrate **506** porous substrate **508,** and porous substrate **510.** Each of plurality of porous substrates **502** is impregnated with an electrorheological fluid.

Shape retaining membrane **500** further comprises plurality of high voltage electrode pairs **512** interspaced with plurality of porous substrates **502.** Plurality of high voltage electrode pairs **512** comprises pairs of high voltage electrodes on either side of each respective porous substrate. As depicted, each pair of high voltage electrode pairs has at least one voltage electrode in common with another pair of high voltage electrode pairs.

In this illustrative example, a respective face of a porous substrate is associated with more than one polarity of high voltage electrodes. In this illustrative example, plurality of high voltage electrode pairs **512** comprises positive high voltage electrode **514,** negative high voltage electrode **516,** positive high voltage electrode **518,** negative high voltage electrode **520,** and positive high voltage electrode **522.** Positive high voltage electrode **514** and negative high voltage electrode **516** act as a pair of high voltage electrodes to generate an electric field in the electrorheological fluid in porous substrate **504.** Positive high voltage electrode **514** is associated with a portion of first face **505** of porous substrate **504.** Negative high voltage electrode **516** is associated with a portion of second face **507** of porous substrate **504.**

Plurality of high voltage electrode pairs **512** further comprises negative high voltage electrode **526,** positive high voltage electrode **528,** negative high voltage electrode **530,** positive high voltage electrode **532,** and negative high voltage electrode **534.** Negative high voltage electrode **526** is associated with a portion of first face **505** of porous substrate **504.** Positive high voltage electrode **528** is associated with a portion of second face **507** of porous substrate **504.**

The discontinuous regions of opposing electrodes produce region **536** and region **538** of shape retaining membrane **500.** Region **536** and region **538** of shape retaining membrane **500** can be independently controlled. Independent control of the regions can allow for different methodology of forming. Independent control allows for independent control of both the amount and timing of rigidity for each region. Independent control of the regions can produce a more repeatable forming process. Independent control of the regions can reduce undesirable effects to the composite laminate during forming.

Skin **524** is wrapped around plurality of porous substrates **502** and plurality of high voltage electrode pairs **512.** Skin **524** is configured to maintain plurality of porous substrates **502** and plurality of high voltage electrode pairs **512** in one package. Skin **524** is configured to maintain the electrorheological fluid in shape retaining membrane **500.**

Although a high voltage generator is not depicted in **Figures 3-5****,** high voltage electrodes, such as pair of high voltage electrodes **304,** plurality of high voltage electrode pairs **412,** or plurality of high voltage electrode pairs **512,** would be connected to a high voltage generator outside of the respective shape retaining membrane. In **Figures 3-4****,** connectors extend outside of skin **310** and skin **424** so that pair of high voltage electrodes **304** and plurality of high voltage electrode pairs **412** can be connected to a high voltage generator. Although connectors are not shown extending outside of skin **524** for ease of description and illustration, connectors would be present to connect plurality of high voltage electrode pairs **512** to a high voltage generator.

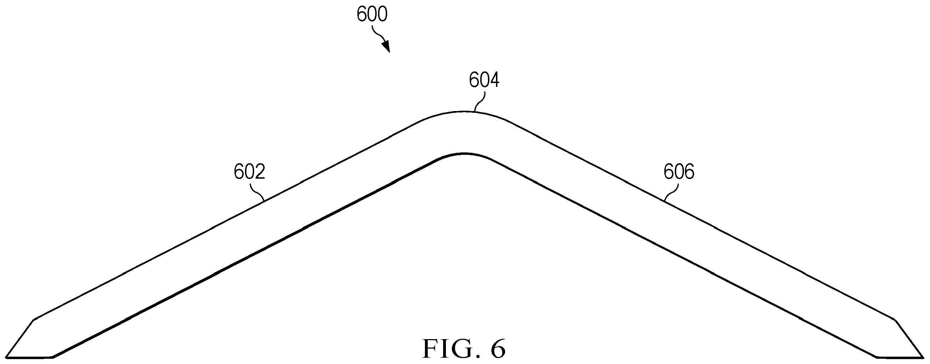

Turning now to **Figure 6** is an illustration of a cross-sectional view of a shape retaining membrane is depicted in accordance with an illustrative embodiment. Shape retaining membrane **600** is a physical implementation of shape retaining membrane **202** of **Figure 2****.**

Shape retaining membrane **600** has three individually controllable regions, region **602,** region **604,** and region **606.** Each of region **602,** region **604,** and region **606** can be made rigid or flexible independently of each other region of shape retaining membrane **600.** As depicted, region **602** and region **606** are currently rigid while region **604** is flexible. A shape retaining membrane can have any desirable quantity of regions, sizes of regions, layouts of regions, and other characteristics of the regions.

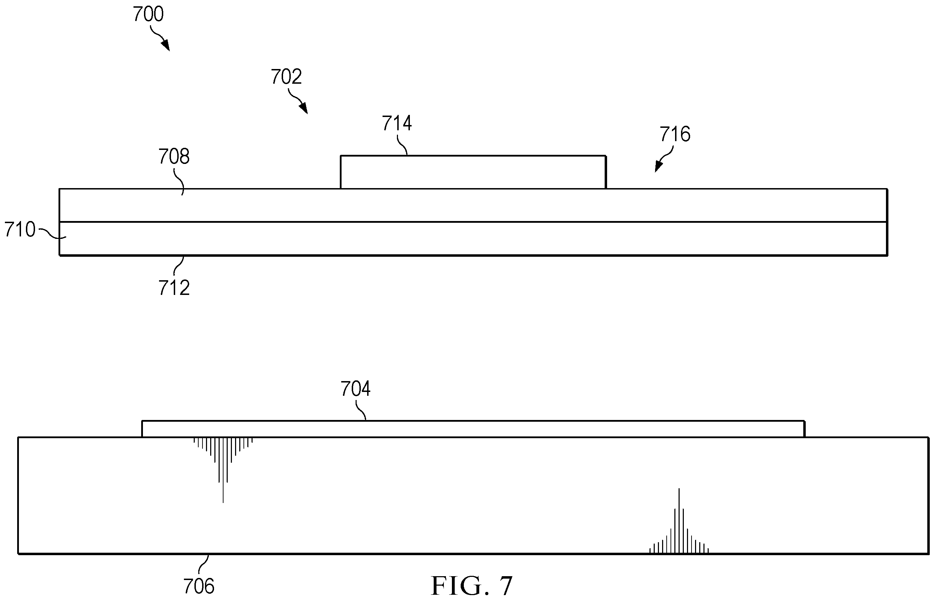

Turning now to **Figure 7****,** an illustration of a cross-sectional view of an end effector with a shape retaining membrane is depicted in accordance with an illustrative embodiment. View **700** is a view of pick and place end effector **702** prior to lifting composite laminate **704** from layup tool **706.** In view **700,** composite laminate **704** is in a first shape. As depicted, composite laminate **704** and layup tool **706** are substantially planar. To lift composite laminate **704,** pick and place end effector **702** is in first shape **716.**

Pick and place end effector **702** comprises shape retaining membrane **708,** lift surface **712,** and connector **714.** Shape retaining membrane **708** comprises a porous substrate impregnated with an electrorheological fluid, a pair of high voltage electrodes on either side of the porous substrate, and a skin wrapped around the porous substrate and the high voltage electrodes. Shape retaining membrane **708** is a physical implementation of shape retaining membrane **202** of **Figure 2****.** In some illustrative examples, shape retaining membrane **708** is the same as shape retaining membrane **300** of **Figure 3****.** In some illustrative examples, shape retaining membrane **708** is the same as shape retaining membrane **400** of **Figure 4****.**

Lift surface **712** is configured to contact composite laminate **704.** Lift surface **712** is connected to shape retaining membrane **708.** Lift surface **712** is flexible to move between multiple shapes. Shape retaining membrane **708** acts to maintain a shape of lift surface **712.** By applying an electric field to shape retaining membrane **708,** shape retaining membrane **708** is placed in a rigid state to maintain a shape of lift surface **712.**

Connector **714** is configured to connect pick and place end effector **702** to a robot or a gantry. As depicted, connector **714** is attached to shape retaining membrane **708.**

Composite laminate **704** can be lifted by any desirable method. In some illustrative examples, lift surface **712** is a surface of vacuum face **710.** In these illustrative examples, vacuum face **710** applies vacuum to lift surface **712.** In these illustrative examples, lift surface **712** is a flexible vacuum surface to move between multiple shapes.

In other illustrative examples, composite laminate **704** can be held against lift surface **712** by an electrostatic charge. When the lift surface **712** utilizes an electrostatic charge, a vacuum may not be used, and **710** may be referred to as an electrostatic layer instead of a vacuum face.

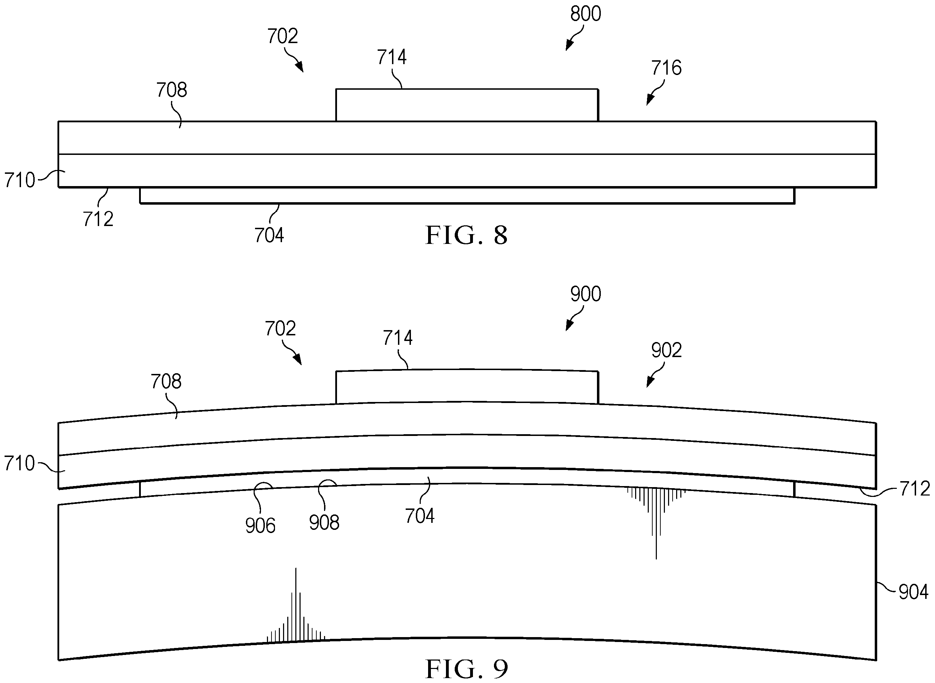

Turning now to **Figure 8****,** an illustration of a cross-sectional view of an end effector with a shape retaining membrane holding a composite laminate is depicted in accordance with an illustrative embodiment. View **800** is a view of pick and place end effector **702** holding composite laminate **704.** In this illustrative example, pick and place end effector **702** is still in first shape **716.** In view **800,** pick and place end effector **702** is transporting composite laminate **704** while in first shape **716.** In view **800,** an electric field is supplied to electrorheological fluid within shape retaining membrane **708** causes shape retaining membrane **708** to be rigid. In view **800,** an electric field is supplied to electrorheological fluid within shape retaining membrane **708** maintains first shape **716.**

Turning now to **Figure 9****,** an illustration of a cross-sectional view of an end effector with a shape retaining membrane shaping a composite laminate is depicted in accordance with an illustrative embodiment. View **900** is a view of pick and place end effector **702** and composite laminate **704** in second shape **902.** In this illustrative example, composite laminate **704** is in contact with tool **904** with surface **906** having second shape **908.**

In some illustrative examples, tool **904** is a forming tool. In some illustrative examples, tool **904** is used to change composite laminate **704** and pick and place end effector **702** to second shape **902.** In some illustrative examples, after forming composite laminate **704** into second shape **902** against tool **904,** pick and place end effector **702** lifts composite laminate **704** from tool **904** in second shape **902.** In these illustrative examples, an electric field is applied to shape retaining membrane **708** to maintain second shape **902** while pick and place end effector **702** lifts and moves composite laminate **704** away from tool **904** in second shape **902.**

In some other illustrative examples, pick and place end effector **702** leaves composite laminate **704** on tool **904** after forming composite laminate **704** into second shape **902.** In some illustrative examples, an electric field is applied to shape retaining membrane **708** to maintain second shape **902** while pick and place end effector **702** moves away from composite laminate **704.** In these illustrative examples, pick and place end effector **702** can be changed to any desirable shape after depositing composite laminate **704** on tool **904.**

To change pick and place end effector **702** between first shape **716** and second shape **902,** an electric field is removed from shape retaining membrane **708.** An electric field applied to shape retaining membrane **708** causes shape retaining membrane **708** to be rigid. When the electric field is removed from shape retaining membrane **708,** shape retaining membrane **708** is flexible.

To place composite laminate **704** against tool **904,** the electric field is stopped to shape retaining membrane **708,** and shape retaining membrane **708** becomes flexible.

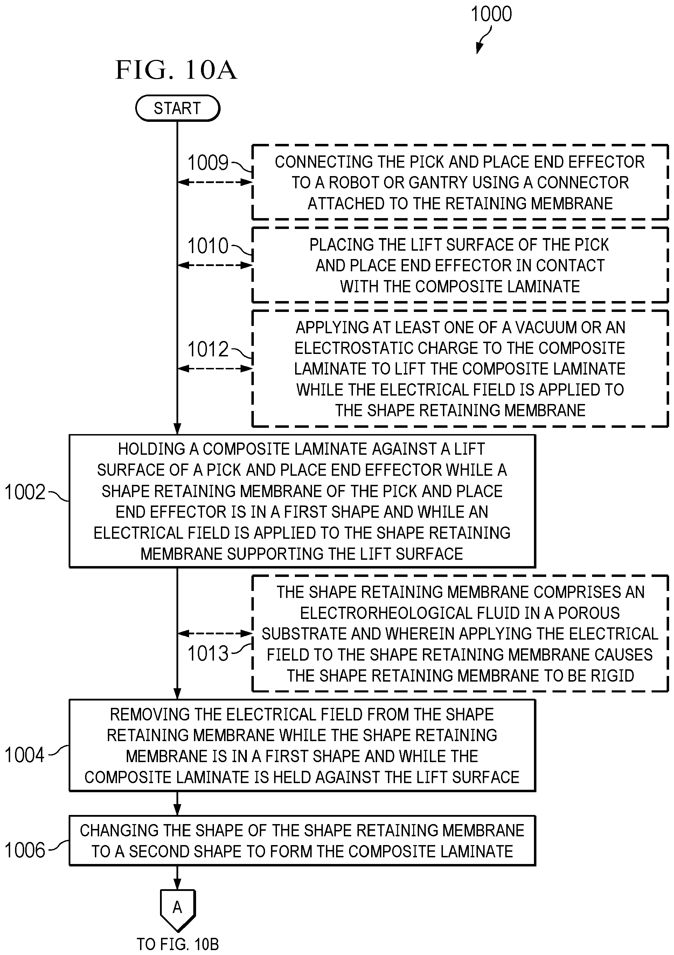

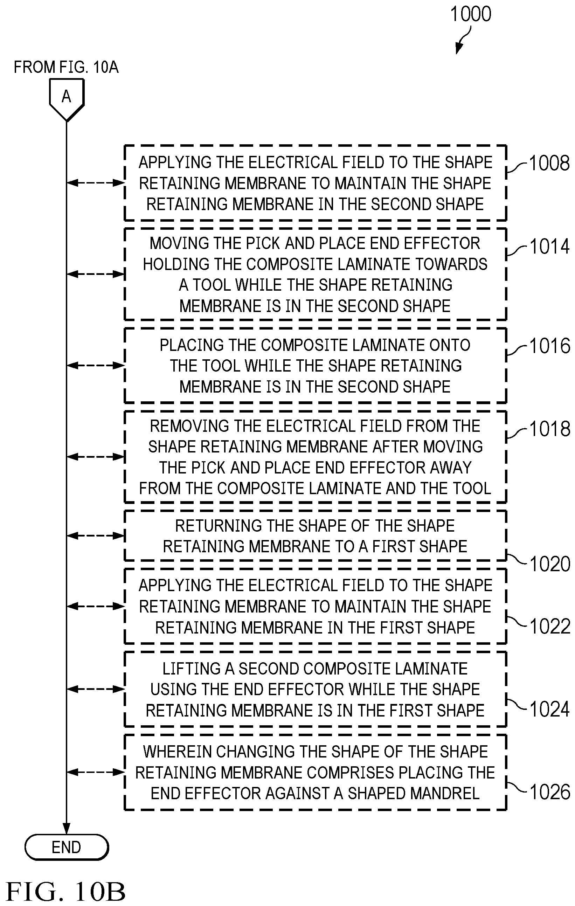

Turning now to **Figure 10****,** a flowchart of a method of moving and forming a composite laminate is depicted in accordance with an illustrative embodiment. Method **1000** can be used to form a composite part of aircraft **100** of **Figure 1****.** Method **1000** can be performed using shape retaining membrane **202** of **Figure 2****.** Method **1000** can be performed using shape retaining membrane **300** of **Figure 3****.** Method **1000** can be performed using any of shape retaining membrane **400** of **Figure 4****,** shape retaining membrane **500** of **Figure 5****,** or shape retaining membrane **600** of **Figure 6****.** Method **1000** can be performed using pick and place end effector **702** of **Figures 7-9****.**

Method **1000** holds a composite laminate against a lift surface of a pick and place end effector while a shape retaining membrane of the pick and place end effector is in a first shape and while an electrical field is applied to the shape retaining membrane supporting the lift surface (operation **1002**). The electrical field applied to the electrorheological fluid causes the shape retaining membrane to be rigid. The electrical field applied to the electrorheological fluid maintains the pick and place end effector in the first shape.

Method **1000** removes the electrical field from the shape retaining membrane while the shape retaining membrane is in the first shape and while the composite laminate is held against the lift surface (operation **1004**). Removing the electrical field from the electrorheological fluid causes the shape retaining membrane to become flexible. When the shape retaining membrane is flexible, a shape of the shape retaining membrane can be changed.

Method **1000** changes the shape of the shape retaining membrane to a second shape to form the composite laminate (operation **1006**). Afterwards, method **1000** terminates.

In some illustrative examples, method **1000** comprises connecting the pick and place end effector to a robot or gantry using a connector attached to the retaining membrane (operation **1009**). In some illustrative examples, the connector can take the form of spring loaded connectors, such as "Pogos".

In some illustrative examples, forming the composite laminate is performed as the composite laminate is placed onto a tool. In some illustrative examples, the shape of the shape retaining membrane is changed to the second shape by pressing the composite laminate against the tool while the shape retaining membrane is flexible. In some illustrative examples, the composite laminate is left on this tool after the shape retaining membrane forms the composite laminate against the tool.

In some illustrative examples, the shape retaining membrane comprises an electrorheological fluid in a porous substrate and wherein applying the electrical field to the shape retaining membrane causes the shape retaining membrane to be rigid (operation **1013**)**.** Applying the electrical field to the shape retaining membrane increases the viscosity of the electrorheological fluid.

In some illustrative examples, method **1000** applies the electrical field to the shape retaining membrane to maintain the shape retaining membrane in the second shape (operation **1008**). In some of these illustrative examples, the shape retaining membrane is held in the second shape to apply force to press the composite laminate against the tool. In some of these illustrative examples, the shape retaining membrane is held in the second shape as part of depositing the composite laminate on the tool.

In some illustrative examples, the composite laminate is formed on a shaped mandrel separate from a tool on which the composite laminate is deposited. In these illustrative examples, the electrical field is applied to the electrorheological fluid to maintain the shape retaining membrane in the second shape such that the pick and place end effector can move the composite laminate within the manufacturing environment in the second shape.

In some illustrative examples, method **1000** places the lift surface of the pick and place end effector in contact with the composite laminate (operation **1010**). In some illustrative examples, method **1000** applies at least one of a vacuum or an electrostatic charge to the composite laminate to lift the composite laminate while the electrical field is applied to the shape retaining membrane (operation **1012**).

In some illustrative examples, method **1000** moves the pick and place end effector holding the composite laminate towards a tool while the shape retaining membrane is in the second shape (operation **1014**). In some illustrative examples, method **1000** places the composite laminate onto the tool while the shape retaining membrane is in the second shape (operation **1016**).

In some illustrative examples, the shape retaining membrane can be in a flexible (soft) state when the composite laminate is placed onto the tool. If the composite laminate is placed onto a tool while the shape retaining membrane is in a flexible (soft) state, the shape retaining membrane is able to push the composite laminate into tool crevices.

In some illustrative examples, method **1000** removes the electrical field from the shape retaining membrane after moving the pick and place end effector away from the composite laminate and the tool (operation **1018**). In some illustrative examples, method **1000** returns the shape of the shape retaining membrane to the first shape (operation **1020**). In some illustrative examples, method **1000** applies the electrical field to the shape retaining membrane to maintain the shape retaining membrane in the first shape (operation **1022**). In some illustrative examples, method **1000** lifts a second composite laminate using the pick and place end effector while the shape retaining membrane is in the first shape (operation **1024**).

In some illustrative examples, changing the shape of the shape retaining membrane comprises placing the pick and place end effector against a shaped mandrel (operation **1026**). In some illustrative examples, the composite laminate is deposited on the shaped mandrel. In some illustrative examples, the shaped mandrel is used to change a shape of the composite laminate prior to depositing the composite laminate on a different tool.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1010** through operation **1026** may be optional.

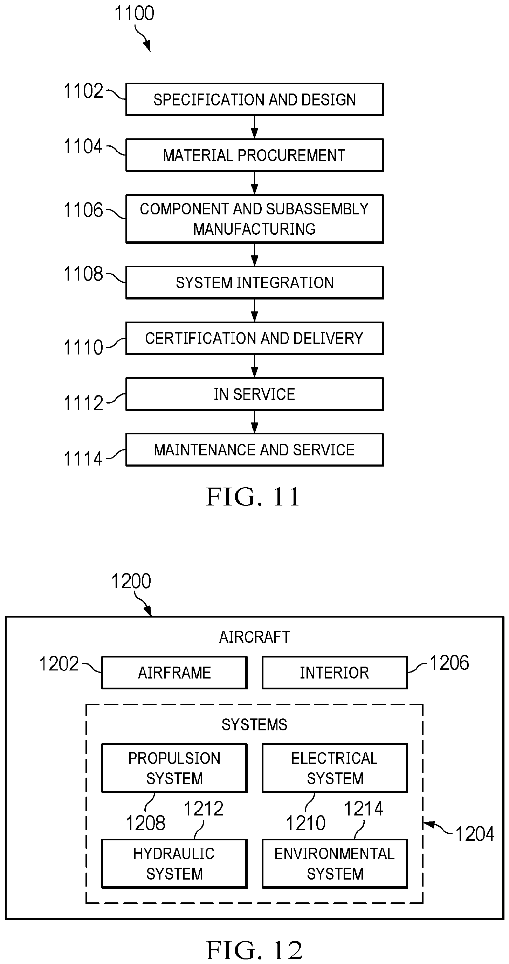

Illustrative embodiments of the present disclosure may be described in the context of aircraft manufacturing and service method **1100** as shown in **Figure 11** and aircraft **1200** as shown in **Figure 12****.** Turning first to **Figure 11****,** an illustration of an aircraft manufacturing and service method in a form of a block diagram is depicted in accordance with an illustrative embodiment. During pre-production, aircraft manufacturing and service method **1100** may include specification and design **1102** of aircraft **1200** in **Figure 12** and material procurement **1104.**

During production, component and subassembly manufacturing **1106** and system integration **1108** of aircraft **1200** takes place. Thereafter, aircraft **1200** may go through certification and delivery **1110** in order to be placed in service **1112.** While in service **1112** by a customer, aircraft **1200** is scheduled for routine maintenance and service **1114,** which may include modification, reconfiguration, refurbishment, or other maintenance and service.

Each of the processes of aircraft manufacturing and service method **1100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 12****,** an illustration of an aircraft in a form of a block diagram is depicted in which an illustrative embodiment may be implemented. In this example, aircraft **1200** is produced by aircraft manufacturing and service method **1100** of **Figure 11** and may include airframe **1202** with plurality of systems **1204** and interior **1206.** Examples of systems **1204** include one or more of propulsion system **1208,** electrical system **1210,** hydraulic system **1212,** and environmental system **1214.** Any number of other systems may be included.

Apparatuses and methods embodied herein may be employed during at least one of the stages of aircraft manufacturing and service method **1100.** One or more illustrative embodiments may be manufactured or used during at least one of component and subassembly manufacturing **1106,** system integration **1108,** in service **1112,** or maintenance and service **1114** of **Figure 11****.**

The illustrative examples provide a shape retaining membrane. The shape retaining membrane is normally flexible but can be locked in shape upon application of high voltage. The shape retaining membrane comprises a flexible bag filled with electrorheological fluid soaked in a porous material. Two electrodes provide the electric field to change the viscosity of the fluid, making the entire membrane rigid.

In some illustrative examples, the shape retaining membrane can be used in an end effector (EE).

A conformable end effector that can take on shape of a shape defining mandrel. The shape of the pick and place end effector can be changed by the selective application of high voltage to the shape retaining membrane.

The pick and place end effector can be placed against a mandrel with no voltage in the electrodes. When the desired shape is reached, high voltage is placed in each electrode of the shape retaining membrane to change the viscosity of the electrorheological fluid to lock the shape of the shape retaining membrane. By applying the high voltage, bending of the pick and place end effector is restricted.

The lower surface of the pick and place end effector can use electrostatic or other means to attach to the composite ply for pick/transport and place. The lift surface of the pick and place end effector can use vacuum or other methods to lift the composite ply.

Some aerospace manufacturing processes such as carbon layup require the use of shape-conforming membranes that can change rigidity on demand. The illustrative examples provide a method to achieve carbon layup with forming using an all-electric method that enhances performance and reliability. In comparison to mechanical systems, the use of electrorheological fluid to control rigidity of the shape retaining membrane has a lower weight, faster shape changing, and lower maintenance than mechanical systems. In the illustrative examples, the change in rigidity is near instantaneous. Use of electrorheological fluid to control rigidity of the shape retaining membrane has a greater reliability and faster shape changing than vacuum bag systems. Ports, cuts, leaks, or other access through the skin of the shape retaining membrane do not undesirably affect the performance of the shape retaining membranes with electrorheological fluid. Additionally, the shape changing membrane of the illustrative examples can be thinner and more rigid.

Further, the disclosure comprises embodiments according to the following clauses:
Clause 1. A shape retaining membrane comprising:
   a porous substrate impregnated with an electrorheological fluid;
   a pair of high voltage electrodes positioned on either side of the porous substrate; and
   a skin wrapped around the porous substrate and the pair of high voltage electrodes.
Clause 2. The shape retaining membrane of clause 1, wherein the pair of high voltage electrodes comprise:
   a negative high voltage electrode on a first face of the porous substrate; and
   a positive high voltage electrode on a second face of the porous substrate.
Clause 3. The shape retaining membrane of clause 1 or 2, wherein the porous substrate comprises a polymeric material.
Clause 4. The shape retaining membrane of any of clauses 1 to 3 further comprising:
   an insulating layer on an outside of the skin.
Clause 5. The shape retaining membrane of any of clauses 1 to 4, wherein the porous substrate is one of a plurality of porous substrates and further comprising:
   a plurality of high voltage electrode pairs interspaced with the plurality of porous substrates, the plurality of high voltage electrode pairs comprising the pair of high voltage electrodes on either side of the porous substrate.
Clause 6. The shape retaining membrane of any of clauses 1 to 5further comprising: access ports extending through the skin of the shape retaining membrane.
Clause 7. The shape retaining membrane of any of clauses 1 to 6, wherein the skin comprises a flexible nonporous material.
Clause 8. The shape retaining membrane of any of clauses 1 to 7, wherein the skin comprises a polymeric material.
Clause 9. The shape retaining membrane of any of clauses 1 to 8, wherein the skin comprises an electrically insulative material.
Clause 10. The shape retaining membrane of any of clauses 1 to 9, wherein a space between the pair of high voltage electrodes is configured to reduce arcing.
Clause 11. A method of moving and forming a composite laminate comprising:
   holding a composite laminate against a lift surface of a pick and place end effector while a shape retaining membrane of the pick and place end effector is in a first shape and while an electrical field is applied to the shape retaining membrane supporting the lift surface;
   removing the electrical field from the shape retaining membrane while the shape retaining membrane is in the first shape and while the composite laminate is held against the lift surface; and
   changing the shape of the shape retaining membrane to a second shape to form the composite laminate.
Clause 12. The method of clause 11, wherein the shape retaining membrane comprises an electrorheological fluid in a porous substrate and applying the electrical field to the shape retaining membrane causes the shape retaining membrane to be rigid.
Clause 13. The method of clause 11 or 12 further comprising:
   applying the electrical field to the shape retaining membrane to maintain the shape retaining membrane in the second shape.
Clause 14. The method of any of clauses 11 to 13 further comprising
   placing the lift surface of the pick and place end effector in contact with the composite laminate; and
   applying at least one of a vacuum or an electrostatic charge to the composite laminate to lift the composite laminate while the electrical field is applied to the shape retaining membrane.
Clause 15. The method of clause 13 or 14 further comprising:
   moving the pick and place end effector holding the composite laminate towards a tool while the shape retaining membrane is in the second shape; and
   placing the composite laminate onto the tool while the shape retaining membrane is in the second shape. Clause 16. The method of clause 15 further comprising:
   removing the electrical field from the shape retaining membrane after moving the pick and place end effector away from the composite laminate and the tool;
   returning the shape of the shape retaining membrane to the first shape;
   applying the electrical field to the shape retaining membrane to maintain the shape retaining membrane in the first shape; and
   lifting a second composite laminate using the pick and place end effector while the shape retaining membrane is in the first shape.
Clause 17. The method of any of clauses 11 to 16, wherein changing the shape of the shape retaining membrane comprises placing the pick and place end effector against a shaped mandrel.
Clause 18. The method of any of clauses 11 to 17 further comprising:
   connecting the pick and place end effector to robot or gantry using a connector attached to the shape retaining membrane.
Clause 19. A pick and place end effector comprising:
   a shape retaining membrane comprising a porous substrate impregnated with an electrorheological fluid, a pair of high voltage electrodes on either side of the porous substrate, and a skin wrapped around the porous substrate and the pair of high voltage electrodes;
   a lift surface configured to contact a composite laminate, the lift surface connected to the shape retaining membrane; and
   a connector configured to connect the pick and place end effector to robot or gantry, the connector attached to the shape retaining membrane.
Clause 20. The pick and place end effector of clause 19, wherein the lift surface is a flexible vacuum surface to move between multiple shapes.
Clause 21. The pick and place end effector of clause 19 or 20, wherein the pair of high voltage electrodes comprise:
   a negative high voltage electrode on a first face of the porous substrate; and
   a positive high voltage electrode on a second face of the porous substrate.
Clause 22. The pick and place end effector of any of clauses 19 to 21, wherein the porous substrate comprises a polymeric material.
Clause 23. The pick and place end effector of any of clauses 19 to 22 further comprising:
   an insulating layer on an outside of the skin.
Clause 24. The pick and place end effector of any of clauses 19 to 23, wherein the porous substrate is one of a plurality of porous substrates and further comprising: a plurality of high voltage electrode pairs interspaced with the plurality of porous substrates, the plurality of high voltage electrode pairs comprising the pair of high voltage electrodes on either side of the porous substrate.
Clause 25. The pick and place end effector of any of clauses 19 to 24 further comprising: access ports extending through the skin of the shape retaining membrane.
Clause 26. The pick and place end effector of any of clauses 19 to 25, wherein the skin comprises a flexible nonporous material.
Clause 27. The pick and place end effector of any of clauses 19 to 26, wherein the skin comprises a polymeric material.
Clause 28. The pick and place end effector of any of clauses 19 to 27, wherein the skin comprises an electrically insulative material.
Clause 29. The pick and place end effector of any of clauses 19 to 28, wherein a space between the pair of high voltage electrodes is configured to reduce arcing.
Clause 30. A shape retaining membrane comprising:
   a pair of high voltage electrodes positioned on either side of a porous substrate;
   an electrorheological fluid located between the pair of high voltage electrodes; and
   a skin wrapped around the porous substrate and the pair of high voltage electrodes.
Clause 31. The shape retaining membrane of clause 30, wherein an inverse relationship between electrode voltage and separation distance exists such that as space between the pair of high voltage electrodes increases the electrode voltage needed to lower viscosity in the electrorheological fluid decreases.
Clause 32. The shape retaining membrane of clause 30 or 31, further comprising the porous substrate impregnated with the electrorheological fluid located between the pair of high voltage electrodes.
Clause 33. The shape retaining membrane of any of clauses 30 to 32, wherein a space between the pair of high voltage electrodes is configured to reduce arcing.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A shape retaining membrane (202, 300, 400, 500, 600, 708) comprising:
a porous substrate (204, 302, 404, 504) impregnated with an electrorheological fluid (202, 303);
a pair of high voltage electrodes (208, 304, 414, 416, 514, 516) positioned on either side of the porous substrate (204, 302, 404, 504); and
a skin (210, 310, 424, 524) wrapped around the porous substrate (204, 302, 404, 504) and the pair of high voltage electrodes (208, 304, 414, 416, 514, 516).

2. The shape retaining membrane (202, 300, 400, 500, 600, 708) of claim 1, wherein the pair of high voltage electrodes (208, 304, 414, 416, 514, 516) comprise:
a negative high voltage electrode (216, 308, 416, 516) on a first face (212, 312, 505) of the porous substrate (204, 302, 404, 504); and
a positive high voltage electrode (218, 306, 414, 514) on a second face (214, 314, 507) of the porous substrate (204, 302, 404, 504).

3. The shape retaining membrane (202, 300, 400, 500, 600, 708) of claim 1 or 2, wherein the porous substrate (204, 302, 404, 504) comprises a polymeric material (222) .

4. The shape retaining membrane (202, 300, 400, 500, 600, 708) of any of claims 1 to 3 further comprising:
an insulating layer (246) on an outside of the skin (210, 310, 424, 524).

5. The shape retaining membrane (202, 300, 400, 500, 600, 708) of any of claims 1 to 4, wherein the porous substrate (204, 302, 404, 504) is one of a plurality of porous substrates (229, 402, 502) and further comprising:
a plurality of high voltage electrode pairs (233, 412, 512) interspaced with the plurality of porous substrates (229, 402, 502), the plurality of high voltage electrode pairs (233, 412, 512) comprising the pair of high voltage electrodes (208, 304, 414, 416, 514, 516) on either side of the porous substrate (204, 302, 404, 504).

6. The shape retaining membrane (202, 300, 400, 500, 600, 708) of any of claims 1 to 5 further comprising:
access ports (292) extending through the skin (210, 310, 424, 524) of the shape retaining membrane (202, 300, 400, 500, 600, 708).

7. The shape retaining membrane (202, 300, 400, 500, 600, 708) of any of claims 1 to 6, wherein the skin (210, 310, 424, 524) comprises a flexible nonporous material (224); and/or wherein the skin (210, 310, 424, 524) preferably comprises a polymeric material (228) and/or an electrically insulative material (226).

8. The shape retaining membrane (202, 300, 400, 500, 600, 708) of any of claims 1 to 7, wherein a space (220) between the pair of high voltage electrodes (208, 304, 414, 416, 514, 516) is configured to reduce arcing.

9. A method (1000) of moving and forming a composite laminate (258, 704) comprising:
holding (1002) a composite laminate (258, 704) against a lift surface (252, 712) of a pick and place end effector (248, 702) while a shape retaining membrane (202, 300, 400, 500, 600, 708) of the pick and place end effector (248, 702) is in a first shape (266, 716) and while an electrical field (244) is applied to the shape retaining membrane (202, 300, 400, 500, 600, 708) supporting the lift surface (252, 712);
removing (1004) the electrical field (244) from the shape retaining membrane (202, 300, 400, 500, 600, 708) while the shape retaining membrane (202, 300, 400, 500, 600, 708) is in the first shape (266, 716) and while the composite laminate (258, 704) is held against the lift surface (252, 712); and
changing (1006) the shape (242) of the shape retaining membrane (202, 300, 400, 500, 600, 708) to a second shape (268, 902) to form the composite laminate (258, 704).

10. The method (1000) of claim 9, wherein (1013) the shape retaining membrane (202, 300, 400, 500, 600, 708) comprises an electrorheological fluid (206, 303) in a porous substrate (204, 302, 404, 504) and applying the electrical field (244) to the shape retaining membrane (202, 300, 400, 500, 600, 708) causes the shape retaining membrane (202, 300, 400, 500, 600, 708) to be rigid (238) .

11. The method (1000) of claim 9 or 10 further comprising:
applying (1008) the electrical field to the shape retaining membrane (202, 300, 400, 500, 600, 708) to maintain the shape retaining membrane (202, 300, 400, 500, 600, 708) in the second shape.

12. The method (1000) of any of claims 9 to 11 further comprising
placing (1010) the lift surface (252, 712) of the pick and place end effector (248, 702) in contact with the composite laminate (258, 704); and
applying (1012) at least one of a vacuum (256) or an electrostatic charge (257) to the composite laminate (258, 704) to lift the composite laminate (258, 704) while the electrical field (244) is applied to the shape retaining membrane (202, 300, 400, 500, 600, 708).

13. The method (1000) of claim 11 or 12 further comprising:
moving (1014) the pick and place end effector (248, 702) holding the composite laminate (258, 704) towards a tool (286, 904) while the shape retaining membrane (202, 300, 400, 500, 600, 708) is in the second shape; and
placing (1016) the composite laminate (258, 704) onto the tool (286, 904) while the shape retaining membrane (202, 300, 400, 500, 600, 708) is in the second shape;
wherein the method (1000) preferably further comprises:
removing (1018) the electrical field (244) from the shape retaining membrane (202, 300, 400, 500, 600, 708) after moving the pick and place end effector (248, 702) away from the composite laminate (258, 704) and the tool (286, 904);
returning (1020) the shape (242) of the shape retaining membrane (202, 300, 400, 500, 600, 708) to the first shape (266, 716);
applying (1020) the electrical field (244) to the shape retaining membrane (202, 300, 400, 500, 600, 708) to maintain the shape retaining membrane (202, 300, 400, 500, 600, 708) in the first shape (266, 716); and
lifting (1022) a second composite laminate using the pick and place end effector (248, 702) while the shape retaining membrane (202, 300, 400, 500, 600, 708) is in the first shape (266, 716).

14. The method (1000) of any of claims 9 to 13, wherein (1024) changing the shape (242) of the shape retaining membrane (202, 300, 400, 500, 600, 708) comprises placing the pick and place end effector (248, 702) against a shaped mandrel (280).

15. The method (1000) of any of claims 9 to 14 further comprising:
connecting (1009) the pick and place end effector (248, 702) to robot or gantry using a connector (250, 714) attached to the shape retaining membrane (202, 300, 400, 500, 600, 708).
